# DEMANDE DE BREVET EUROPEEN

(11) **EP 3 469 896 A1**
(43) Date de publication de la demande: **17.04.2019**
(21) Numéro de dépôt: 18197736.4
(22) Date de dépôt: 28.09.2018
(51) Int. Cl.: A01M 1/14, A01M 1/16

(54) **PIÈGE À MOUCHE DE L'OLIVE**

(30) Priorité: 10.10.2017 FR 1759464
(71) Demandeur: Les Opies, 13100 Aix-en-Provence (FR)
(72) Inventeur: DAUDEY, Bertrand, 13100 Aix-en-Provence (FR); BOEGLI, Philippe, 13100 Aix-en-Provence (FR)
(74) Mandataire: de Roquemaurel, Bruno

(57) **Abrégé**

L'invention concerne un dispositif de piège à mouche de l'olive, comprenant un support (1) comportant une face (1a, 1b) au moins partiellement enduite d'une couche de colle apte à retenir une mouche, le support (1) comportant une première surface (1a) recouverte d'une image (2) en couleurs d'olives en taille réelle et ayant une maturité correspondant à la période de ponte de la mouche de l'olive, la couche de colle étant transparente et recouvrant au moins partiellement l'image.

## Description

La présente invention concerne la lutte contre les mouches de l'olive du type bactrocera oleae. La mouche de l'olive est une espèce d'insectes diptères appartenant à la famille des tephritidae, sous-famille dacinae. Cette mouche est responsable de dégâts substantiels dans les exploitations d'oliviers, en venant pondre dans les olives. Cette mouche ne parasite que les oliviers.

La lutte contre la mouche de l'olive est l'une des principales préoccupations des producteurs d'huile d'olive. Face à une population importante de mouches pouvant détruire totalement une récolte, les traitements à base de pesticides montrent une grande efficacité. Cependant, en raison de leur toxicité, les produits réellement efficaces ne sont pas utilisables pour protéger des fruits de la taille des olives. En outre, ces produits ne sont pas autorisés dans le cadre d'une production naturelle ou biologique.

Par ailleurs, il existe plusieurs techniques de lutte contre la mouche de l'olive n'utilisant pas de pesticides. Les techniques actuelles sans contact avec le fruit s'avèrent peu efficaces et ne permettent pas d'empêcher la destruction d'une proportion importante d'olives. La technique la plus utilisée consiste à réaliser un piège à l'aide d'une bouteille en plastique partiellement remplie d'une solution d'eau et de phosphate diatonique (de formule chimique (NH₄)₂HPO₄). Cette solution agit comme attractif alimentaire sur la mouche qui entre dans la bouteille et s'y noie. Cette technique ne permet pas d'attraper un nombre de mouches suffisant pour en limiter la reproduction.

Il existe également des pièges destinés à attirer les mâles. Ils comprennent une ou plusieurs plages de couleur jaune engluées, et une capsule diffusant des phéromones femelle, à renouveler périodiquement. Sur une même durée, les pièges à phéromones femelles attrapent davantage de mouches qu'un piège à base d'attractif alimentaire pour la simple raison que les phéromones présentent un rayon d'action plus important qu'un attractif alimentaire. En général, un piège à base de phéromones suffit pour protéger 30 à 50 oliviers (selon la variété d'oliviers et l'espacement des arbres), tandis qu'un piège alimentaire ne protège que trois ou quatre arbres. Les pièges à base de phéromones permettent ainsi de limiter d'une manière importante la reproduction des mouches. Cependant, les pièges à base de phéromones sont limités à l'attraction des mouches mâles, et non des mouches femelles directement impliquées dans la destruction des olives. Il en résulte que les mouches femelles peuvent se développer dans des exploitations voisines non protégées et venir pondre dans l'exploitation équipée de pièges à base de phéromones. Les pièges à base de phéromones nécessitent donc l'utilisation d'un autre type de piège permettant d'attraper les femelles, ce qui accroit le coût de la lutte. En outre, la capsule de phéromones perd son pouvoir attractif avec le temps et les intempéries. Elle doit être changée toutes les cinq semaines environ. Le coût de ce type de piège étant assez élevé, il est peu utilisé par les exploitants de petites/moyennes parcelles. Les pièges à base de phéromones sont généralement préconisés pour repérer les périodes de reproduction des mouches afin de traiter les arbres au bon moment avec des insecticides.

Un autre moyen de lutte contre la mouche de l'olive consiste à utiliser un agent répulsif ne visant pas à tuer les mouches mais à les leurrer. L'agent répulsif le plus connu et utilisé est l'argile blanche que l'on pulvérise sur les arbres. L'argile forme une couche protectrice sur les fruits que la mouche ne perçoit pas comme hôte de ponte ou l'empêche de pondre en créant sur les fruits une barrière minérale. Cette technique de protection suppose d'une part de disposer de moyens matériels nécessaires à la pulvérisation de l'argile sur l'intégralité de chaque arbre de l'exploitation. Cette technique fait fuir les mouches mais ne les détruit pas. Elles peuvent donc s'attaquer aux exploitations voisines si celles-ci ne sont pas protégées. En outre, la couche d'argile ne résiste pas aux précipitations. Une pulvérisation d'argile doit donc être effectuée après chaque pluie ce qui peut entrainer des coûts élevés.

En résumé, les techniques de protection des oliviers contre la mouche de l'olive n'utilisant pas de pesticides sont peu efficaces et leur utilisation est consommatrice de temps.

Il existe donc un besoin d'une technique simple, efficace et peu coûteuse, de destruction des mouches mâles et femelles de l'olive n'utilisant pas de pesticides.

Des modes de réalisation concernent un dispositif de piège à mouche de l'olive, comprenant un support comportant une face au moins partiellement enduite d'une couche de colle apte à retenir une mouche. Selon un mode de réalisation, le support comporte une première surface recouverte d'une image en couleurs d'olives en taille réelle et ayant une maturité correspondant à la période de ponte des mouches de l'olive, la couche de colle étant transparente et recouvrant au moins partiellement l'image.

Selon un mode de réalisation, le support comporte une seconde surface ayant une couleur uniforme choisie pour attirer la mouche de l'olive, la seconde surface étant recouverte au moins partiellement de la couche de colle transparente.

Selon un mode de réalisation, la surface de couleur uniforme présente une couleur comportant une composante cyan de 0 à 5%, une composante magenta de 15 à 25%, une composante jaune de 90 à 100%, et une composante noire de 0 à 5%.

Selon un mode de réalisation, l'image ou la surface de couleur uniforme inclut une image de la mouche de l'olive en taille réelle.

Selon un mode de réalisation, l'image de parties de l'arbre à protéger ou l'image de la mouche de l'olive est une photographie imprimée en quadrichromie sur le support.

Selon un mode de réalisation, le dispositif comprend des phéromones susceptibles d'attirer la mouche de l'olive.

Selon un mode de réalisation, les phéromones sont incorporées dans la couche de colle, ou dans une bande en un matériau susceptible d'être imprégné des phéromones, la bande étant fixée sur le support.

Selon un mode de réalisation, le support présente une structure plane ayant deux faces au moins partiellement imprimées et au moins partiellement enduites de la couche de colle, ou bien présente une structure tridimensionnelle à plusieurs faces externes au moins partiellement imprimées et au moins partiellement enduites de la couche de colle.

Selon un mode de réalisation, les surfaces enduites de la couche de colle sont recouvertes, avant utilisation du dispositif, d'un film de protection anti-adhérent susceptible d'être retiré sans arracher la couche de colle.

Selon un mode de réalisation, le dispositif comprend des moyens d'attache du dispositif dans un arbre.

Selon un mode de réalisation, le dispositif comprend un récipient muni d'une ouverture de la taille de la mouche de l'olive, et sur lequel est fixée une feuille rassemblant sur une même face visible la première surface et/ou la seconde surface.

Des exemples de réalisation de l'invention seront décrits dans ce qui suit, à titre non limitatif en relation avec les figures jointes parmi lesquelles :
Les figures 1A et 1B représentent deux faces d'un piège à mouche, selon un mode de réalisation,
Les figures 2A et 2B représentent deux faces d'un piège à mouche, selon un autre mode de réalisation.

La présente invention se base sur l'observation que les mouches de l'olive sont attirées visuellement par les olives, même lorsque ces dernières ne sont plus sur l'arbre, et que les mouches mâles sont attirées par la couleur jaune.

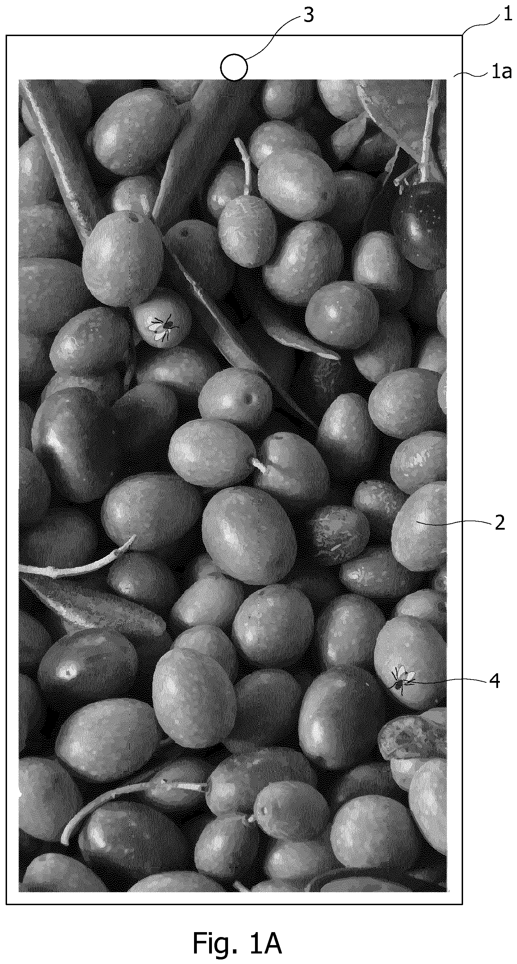

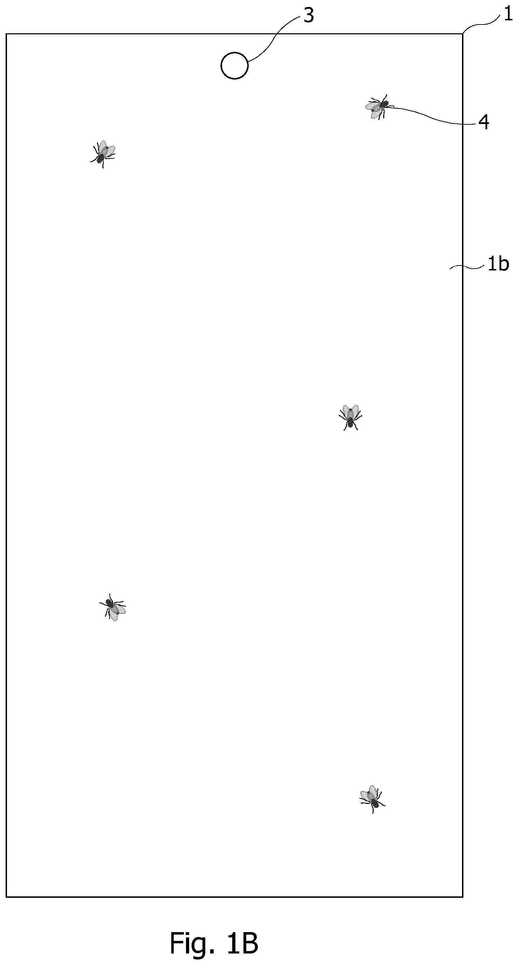

Les figures 1A, 1B représentent respectivement deux faces d'un piège à mouche de l'olive, selon un mode de réalisation. Le piège à mouche comprend un support 1 comportant une première face 1a représentée sur la figure 1A. La face 1a est au moins partiellement recouverte d'une image 2 en couleurs représentant des fruits à protéger, en taille réelle, et ayant la maturité correspondant à la période de ponte de la mouche. L'image 2 peut être une photographie. Dans l'exemple de la figure 1A, l'image 2 représente des olives ou des rameaux d'olivier, dans laquelle les olives présentent une taille correspondant à la taille réelle des olives pendant la période de ponte des mouches. La face 1a, et en particulier l'image 2 est au moins partiellement enduite d'une couche de colle transparente apte à retenir et piéger les mouches qui se poseraient sur celle-ci. Le support 1 peut être percé d'un trou 3 agencé pour faciliter la fixation du support 1 dans un arbre. L'image 2 de la face 1a permet d'attirer les mouches femelles pendant toute la période de ponte.

La figure 1B représente une seconde face 1b du support 1. Dans l'exemple de la figure 1A, la face 1b est de couleur uniforme, par exemple une couleur choisie pour attirer les mouches. Dans l'exemple des mouches de l'olive, la face 1b est de couleur jaune, comportant une composante cyan de 0 à 5%, une composante magenta de 15 à 25%, une composante jaune de 90 à 100%, et une composante noire de 0 à 5%. Dans un exemple de réalisation de l'invention, la face 1b présente un code de couleur CMJN (ou CMYK) de 0%, 20%, 100%, 0%. La face 1b est également enduite au moins partiellement d'une couche de colle transparente, ayant également la propriété de retenir et piéger les mouches.

Selon un mode de réalisation, des phéromones femelles sont mélangées à la couche de colle enduite sur la face 1b. La couche de colle de la face 1a peut également inclure des phéromones des mouches femelles.

Le support 1 peut être réalisé dans un matériau en forme de feuille, résistant à l'eau ou recouvert d'une couche résistante à l'eau, tel que du carton plastifié.

La face 1a et/ou 1b peut également comporter des images (par exemple des photographies) en taille réelle de mouches mâles et/ou femelles. En effet, il a pu être constaté qu'un piège adhésif attire plus de mouches lorsque des mouches sont déjà collées sur les faces adhésives du piège.

La face 1a peut être imprimée en quadrichromie avant d'être enduite de la couche de colle transparente. La face 1b peut également être imprimée en quadrichromie. Une partie, par exemple le contour, de la face 1a peut être de couleur uniforme, par exemple en jaune pour attirer les mouches mâles. Ainsi, chaque face du support 1 peut comporter une partie recouverte d'une image d'olives ou de rameaux d'oliviers pour attirer en particulier les mouches femelles, et une partie en une couleur uniforme pour attirer les mouches mâles. Les surfaces imprimées en quadrichromie peuvent avoir été traitées pour que leurs couleurs résistent plus longtemps aux intempéries et aux rayons ultraviolets. De cette manière, le piège peut rester opérationnel au moins pendant toute la période de la ponte, c'est-à-dire pendant trois mois environ dans le cas de la mouche de l'olive.

Lors de la fabrication du piège à mouche, les surfaces adhésives peuvent être recouvertes d'un film de protection anti-adhérent à retirer lors de la mise en place du piège dans un arbre, et susceptible d'être retiré sans arracher la couche de colle.

Ainsi, le piège à mouche selon l'invention présente l'avantage d'attraper à la fois les mouches mâle et femelle. Il permet également de lutter contre les mouches de l'olive sans avoir à mettre en oeuvre des traitements phytosanitaires, tels que ceux interdits par l'agriculture biologique. A l'usage, le piège à mouche s'avère efficace pour protéger une exploitation d'oliviers, à raison d'un piège pour deux ou trois arbres. Ce piège à mouche présente un coût de fabrication relativement faible, ce qui lui permet d'être mis utilisé par l'ensemble des exploitations d'une région, la lutte contre les mouches de l'olive étant rendue d'autant plus efficace qu'elle est généralisée à la totalité d'une région, sans exception.

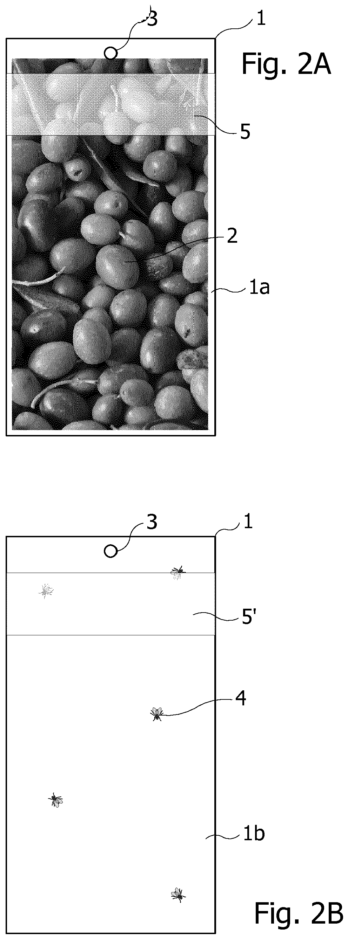

Les figures 2A, 2B représentent respectivement deux faces d'un piège à mouche de l'olive, selon un autre mode de réalisation. Le piège des figures 2A, 2B diffère de celui des figures 1A, 1B en ce que les couches de colle ne sont pas imprégnées de phéromones, et en ce que le piège comporte une ou plusieurs bandes 5,5' collées sur l'une ou l'autre, ou les deux faces 1a, 1b du support. Les bandes 5, 5' sont formées dans un matériau susceptible d'être imprégné de phéromones, en particulier, de phéromones femelles de la mouche de l'olive. Les bandes 5, 5' peuvent par exemple être réalisées en paraffine ou en mousse. L'utilisation de bandes, par exemple en mousse, peut permettre de recharger le piège en phéromones, sachant que la quantité de phéromones dans le piège peut être épuisée au bout de quelques semaines ou en cas de précipitation.

Il apparaîtra clairement à l'homme de l'art que la présente invention est susceptible de diverses autres variantes de réalisation et diverses autres applications. En particulier, le piège n'inclut pas nécessairement des phéromones. En effet, les phéromones peuvent être omises, notamment pour des raisons de coût, sachant que dans le cas de la mouche de l'olive, seule la femelle est responsable directement de la destruction des olives et qu'elle n'est pas attirée par des phéromones connues.

Les phéromones utilisées ne sont pas nécessairement des phéromones femelles, ni des phéromones sexuelles, mais peuvent simplement être choisies en fonction de leur pouvoir attractif sur l'insecte mâle et/ou femelle. Elles peuvent être également un mélange de phéromones de différentes natures.

Le support 1 peut présenter davantage que deux faces. Ainsi, il peut être replié sur lui-même pour former une structure tridimensionnelle à 3 ou 4 faces externes. Il peut également être prévu d'utiliser non seulement les faces externes de la structure, mais également les faces internes pour y apposer les images et y appliquer une couche de colle. Par ailleurs, les surfaces du support de couleur uniforme ou comportant une image de parties ou de fruits de l'arbre, ne sont pas nécessairement planes.

Un attractif alimentaire tel que du phosphate diatonique peut être introduit dans la colle recouvrant en partie les faces du support 1, ou dans les bandes 5, 5'.

Le piège à mouche peut comprendre un récipient (tel qu'une bouteille) muni d'une ouverture de la taille de la mouche, et sur lequel est fixée une feuille rassemblant sur une même face visible la face 1a et/ou la face 1b précédemment décrites. La bouteille peut être partiellement remplie d'une solution incluant un attractif alimentaire et/ou des phéromones sexuelles, les mouches entrant dans la bouteille se noyant dans la solution.

## Revendications

1. Dispositif de piège à mouche de l'olive, comprenant un support (1) comportant une face (1a, 1b) au moins partiellement enduite d'une couche de colle apte à retenir une mouche,
**caractérisé en ce que** le support (1) comporte une première surface (1a) recouverte d'une image (2) en couleurs d'olives en taille réelle et ayant une maturité correspondant à la période de ponte des mouches de l'olive, la couche de colle étant transparente et recouvrant au moins partiellement l'image.

2. Dispositif selon la revendication 1, dans lequel le support (1) comporte une seconde surface (1b) ayant une couleur uniforme choisie pour attirer la mouche de l'olive, la seconde surface étant recouverte au moins partiellement de la couche de colle transparente.

3. Dispositif selon la revendication 2, dans lequel la surface de couleur uniforme (1b) présente une couleur comportant une composante cyan de 0 à 5%, une composante magenta de 15 à 25%, une composante jaune de 90 à 100%, et une composante noire de 0 à 5%.

4. Dispositif selon l'une des revendications 1 à 3, dans lequel l'image (2) ou la surface de couleur uniforme (1b) inclut une image (4) de la mouche de l'olive en taille réelle.

5. Dispositif selon la revendication 4, dans lequel l'image (2) de parties de l'arbre à protéger ou l'image (4) de la mouche de l'olive est une photographie imprimée en quadrichromie sur le support (1).

6. Dispositif selon l'une des revendications 1 à 5, comprenant des phéromones susceptibles d'attirer la mouche de l'olive.

7. Dispositif selon la revendication 6, dans lequel les phéromones sont incorporées dans la couche de colle, ou dans une bande (5, 5') en un matériau susceptible d'être imprégné des phéromones, la bande étant fixée sur le support (1).

8. Dispositif selon l'une des revendications 1 à 7, dans lequel le support (1) présente une structure plane ayant deux faces au moins partiellement imprimées et au moins partiellement enduites de la couche de colle, ou bien présente une structure tridimensionnelle à plusieurs faces externes au moins partiellement imprimées et au moins partiellement enduites de la couche de colle.

9. Dispositif selon l'une des revendications 1 à 8, dans lequel les surfaces enduites de la couche de colle sont recouvertes, avant utilisation du dispositif, d'un film de protection anti-adhérent susceptible d'être retiré sans arracher la couche de colle.

10. Dispositif selon l'une des revendications 1 à 9, comprenant des moyens d'attache (3) du dispositif dans un arbre.

11. Dispositif selon l'une des revendications 1 à 10, comprenant un récipient muni d'une ouverture de la taille de la mouche de l'olive, et sur lequel est fixée une feuille rassemblant sur une même face visible la première surface (1a) et/ou la seconde surface (1b).
